# EUROPEAN PATENT SPECIFICATION

(11) **EP 3 707 033 B1**
(45) Date of publication and mention of the grant of the patent: **23.03.2022**
(21) Application number: 18789215.3
(22) Date of filing: 19.09.2018
(51) Int. Cl.: B60R 22/32

(54) **EMERGENCY DEVICE FOR THE QUICK RELEASE OF SAFETY BELTS FOR VEHICLES**
NOTFALLVORRICHTUNG ZUR SCHNELLEN FREISETZUNG VON SICHERHEITSGURTEN FÜR FAHRZEUGE
DISPOSITIF D'URGENCE PERMETTANT LA LIBÉRATION RAPIDE DE CEINTURES DE SÉCURITÉ POUR VÉHICULES

(30) Priority: 13.10.2017 IT 201700116007 U
(43) Date of publication of application: 16.09.2020
(73) Proprietor: Buschini, Marco, 30033 Noale (VE) (IT); Gallan, Silvano, 30014 Cavarzere (VE) (IT)
(72) Inventor: Buschini, Marco, 30033 Noale (VE) (IT); Gallan, Silvano, 30014 Cavarzere (VE) (IT)
(74) Representative: Vinci, Marcello
(86) International application number: PCT/IB2018/057202
(87) International publication number: WO 2019/073323

(56) References cited:
- EP-A1- 0 446 766
- WO-A1-86/07020
- DE-A1- 4 019 402
- US-A1- 2012 279 028

## Description

The present patent relates to release devices for vehicle safety belts, and in particular it concerns a new emergency device for the quick release of safety belts for vehicles.

The invention finds effective and particular application in motor vehicles, where each seat is equipped with a safety belt made up of an automatic spool fixed laterally to the seat, from which at least one belt webbing originates, which has a movable coupling ring suited to be fastened to a coupling point of an element fixed on the opposite side of the seat. With the belt buckled, a first part of the belt webbing is positioned at the height of the passenger's pelvis and a second part of the belt webbing is positioned transversely in front of the passenger's torso.

The coupling/release of each seat belt is managed individually by each passenger.

At the coupling point there is a quick coupling/release device made up of a containment body fixed in a stable and non-removable manner to the vehicle's structure and of a locking assembly contained in the containment body and comprising a latch suited to engage the movable ring of the belt when it is completely and correctly inserted into said locking assembly.

A quick release button is also mounted on the quick coupling/release device, mechanically connected to the locking assembly so that, when the passenger presses said button, the locking assembly releases the movable ring of the belt, which is released in its turn and then rewinds automatically.

The quick coupling/release device ensures that the passenger can unfasten the seat belt with one hand and with a very simple and quick operation.

Despite this, in particular emergency conditions or in case of danger, such as following an accident or in exceptional emergency situations, the passenger is unable to reach the lateral quick release button, which is also inaccessible from the outside, for example by an external rescuer.

In order to be able to unbuckle the belt, the latter must enter the vehicle or cut the belt webbing. Both of these operations take some time to be completed and may even be impossible if it is not possible to get into the vehicle or if a cutting tool is not available. Similarly, if one of the passengers in the car is having difficulties for health reasons, due to an accident, or for any other reason, and is unable to unbuckle the belt, a second passenger of the vehicle, after unbuckling his/her own belt, must also manage to reach the other passenger's coupling/release device in order to press the release between.

Moreover, some particular types of users, such as law enforcement personnel or emergency medical vehicle personnel, often have to get out of a vehicle quickly and have to hold other needed objects in their hands; as a result they are hampered in their efforts to quickly unbuckle the safety belt.

Vehicle safety belts, as well as the related spools and coupling/release devices, have been designed and constructed to withstand the extreme stresses to which a vehicle can be subjected, particularly in the event of an accident. Furthermore, the standards related to these safety devices are established by law, and the latter cannot be tampered with or modified since they are installed during the construction of the vehicle.

Therefore, any tampering with the coupling/release device aimed at resolving the aforementioned drawbacks is not currently admissible by the legislation in force.

EP446766A1 discloses an emergency device for the quick release of safety belts for vehicles, with at least one closing buckle containing a gear mechanism able to electronically quick release by the use of button.

To overcome the aforementioned drawbacks, a new emergency device for the quick release of vehicle safety belts has been designed and constructed.

The main object of the present invention is to provide a device which makes it possible to deal with emergency and dangerous situations that may occur in particular cases, such as in the event of an accident, a passenger's illness, urgent or stressful situations, and so on.

An important object of the present invention is to provide a device which enables a single individual, even if not an occupant of the vehicle, to release one or more safety belts.

Another important object is to provide a device which does not affect in any way the existing devices for coupling/releasing the already installed safety belts of a vehicle.

These and other direct and complementary objects are achieved by the new emergency device for the quick release of safety belts for vehicles, comprising in its main parts:
at least one closing buckle, suited to be attached between a quick coupling/release device and
the movable ring of a safety belt mounted in a vehicle, said at least one closing buckle in turn comprising a first containment body, a ring integral with said first containment body and
configured so that it can be inserted and latched into a pre-existing quick coupling/release device for the safety belts of a vehicle, and a locking assembly contained in said containment body and suited to constrain the vehicle safety belt's movable ring;
at least one drive cable connected with one of its ends to said locking assembly and with the other end to at least one safety button;
said at least one safety button, in turn comprising a second containment body and a button mechanically connected to said at least one drive cable,
and wherein said button is configured in such a way that, when pressed, it pulls said drive cable which acts on said locking assembly of said closing buckle, disengaging the movable ring of the safety belt attached to it, and thereby causing the release of the safety belt.

Said at least one safety button can be positioned anywhere inside the vehicle, being connected by means of said drive cable to said closing buckle, which instead is attached to the quick coupling/release device fastened laterally to a seat.

Said emergency device may also comprise two or more of said closing buckles, each attached to a quick coupling/release device of a seat suitable for connecting the movable ring of the belt installed on the same seat.

A drive cable connects each one of said closing buckles to a single safety button.

In this way, by pressing said single safety button it is possible to cause the release of two or more safety belts of different seats.

Said safety button can therefore be mounted in any position inside the vehicle, for example in a central and easily accessible position on the vehicle dashboard, or elsewhere.

Said safety button comprises, for this purpose, fixing means suited to secure it permanently, such as screws or the like, or to secure it removably, such as clips or the like.

The characteristics of the present invention are better clarified by the following description, with reference to the drawings that are attached hereto by way of a non-limiting example.

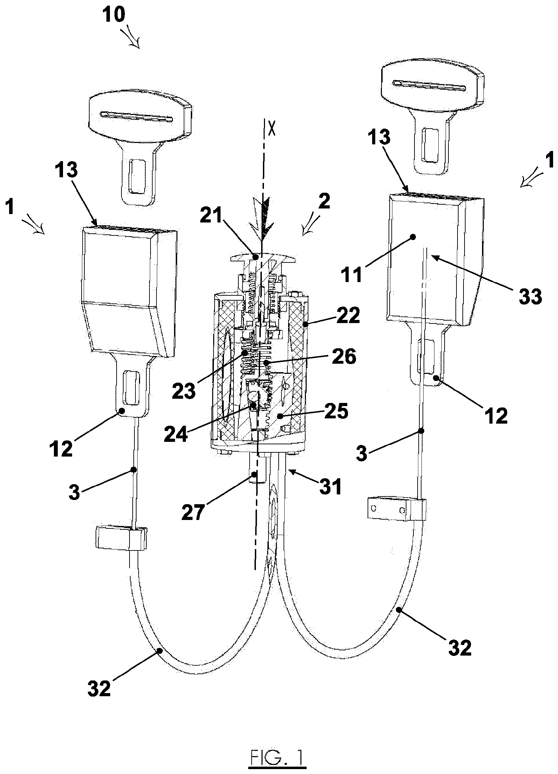

Figure 1 shows a schematic view of a possible embodiment of the new emergency device (10), comprising, in this example, two closing buckles (1), each connected by a drive cable (3) to a single safety button (2), shown in cross section.

Figure 2 shows a partial exploded view of said safety button, while Figure 3 shows a three-dimensional view, in which the containment body (22) is transparent so as to show the components inside it.

The emergency device (10) for the quick release of safety belts for vehicles comprises, among its main parts, at least one closing buckle (1) suited to be attached between a quick coupling/release device and the movable ring of a safety belt mounted in a vehicle, not shown in the figures.

Each of said closing buckles (1) in turn comprises a first containment body (11), for example made up of two half-shells that can be assembled together, a ring (12) integral with said first containment body (11) and protruding from it, configured to be inserted and fastened into a pre-existing quick coupling/release device for safety belts in a vehicle.

On the opposite side with respect to said ring (12) on said containment body (11) a seat (13) is provided for the insertion of the movable ring of a vehicle safety belt.

Inside said containment body (11) a locking assembly is installed which is accessible through said seat (13) and suited to automatically constrain said movable ring of the safety belt, when the latter is correctly inserted into the containment body (11).

Said locking assembly is, for example, of a type which is known and currently used in common quick coupling/release devices for safety belts and comprises, for example, a latch with elastic means, normally in the engaged position, which, once moved by the movable ring of the belt that enters the insertion seat, return to the engaged position blocking the release of the movable ring.

Said emergency device (10) comprises, for each one of said closing buckles (1), at least one drive cable (3) connected with one of its ends (33) to said locking assembly and with the opposite end (31) to at least one safety button (2).

More specifically, said cable (3) slides freely in a sheath (32).

In a possible embodiment, shown in the figures, said button (21) of said safety button (2) slides with respect to a containment body (22) and is integrally fastened to a first rack gear (23) which is arranged so that it is parallel to the sliding direction (X) of said button (21). Said first rack gear (23) is mechanically connected by means of a gear wheel (24) to a second movable rack gear (25), driven so that it translates in a parallel direction with respect to said first rack gear (23).

The end (31) of each one of said one or more drive cables (3) is connected to said second rack gear (25), each one of said one or more drive cables (3) being able to slide freely inside a sheath (32).

A return spring (26) operates coaxially with respect to said button (21) to keep the button (21) in the raised position, which corresponds to the locked condition of the safety belt when the movable ring of the belt is inserted in said locking assembly of said closing buckle (1).

The compression of said button (21) towards the inside of the containment body (22), for example downwards, causes the corresponding displacement of said first rack gear (23) which, by means of said gear wheel (24), causes a corresponding displacement of said second rack gear (25) in the opposite direction, that is, an upward displacement.

Said second rack gear (25) then pulls said first end (31) of the drive cable (3) upwards, and said drive cable (3) in turn transmits the movement by means of its second end (33) which acts on said locking assembly of said closing buckle (1).

The release action is exerted simultaneously on all the connected safety belts, which are all released simultaneously by pressing a single button (21).

Once the button (21) has been released, it returns to its normal position thanks to the action of said return spring (26), restoring the normal operating condition of all closing buckles (1). Said safety button (2) comprises fixing means suited to secure it permanently, such as screws or the like (27), or to secure it removably, such as clips or the like, to constrain said safety button (2) in any suitable position inside the vehicle, for example in a central area of the dashboard.

According to the invention, the new emergency device (10) may also include further functions that can be activated by means of said safety button (2), together with the quick release of the safety belts.

For example, according to the invention the new emergency device (10) may comprise an alarm or communication system which is activated when the safety button (2) is pressed, for example sending a warning signal to a control centre. The new emergency device (10) may also comprise a connection to a microphone for radio communication, which is activated when the safety button (2) is pressed.

Therefore, with reference to the preceding description and the attached drawings, the following claims are expressed.

## Claims

1. Emergency device (10) for the quick release of safety belts for vehicles, **characterized in that** it comprises:
- at least one closing buckle (1) suited to be coupled between a quick coupling/release device and the movable ring of a vehicle's safety belt, said at least one closing buckle (1) in turn comprising a first containment body (11), a ring (12) integral with said first containment body and configured to be inserted in and attached to a pre-existing quick coupling/release device for safety belts in a vehicle, and a locking assembly contained in said containment body (11) and suited to constrain said movable ring of the vehicle safety belt;
- at least one drive cable (3) connected with one of its ends (33) to said locking assembly of said closing buckle (1) and with the opposite end (31) to at least one safety button (2);
- said at least one safety button (2), in turn comprising a second containment body and a button (21) mechanically connected to said end (31) of said at least one drive cable (3),
and wherein said safety button (2) is configured in such a way that, when pressed, it pulls said drive cable (3) which acts on said locking assembly of said closing buckle (1), releasing the movable ring of the safety belt attached to it and thus causing the release of the safety belt.

2. Emergency device (10) according to claim 1, **characterized in that** it comprises two or more of said closing buckles (1), each suited to be installed in a quick coupling/release device of a safety belt mounted in a vehicle, and wherein said two or more closing buckles (1) are connected, each one by means of one of said drive cables (3), to a single safety button (2).

3. Emergency device (10) according to claim 1 or 2, **characterized in that** said closing buckles (1) comprises said ring (12) integral with said first containment body (11) and wherein, on the opposite side of said containment body (11) with respect to said ring (12), a seat (13) is provided for the insertion of a movable ring of a vehicle safety belt, and wherein inside said containment body (11) said locking assembly is mounted, which is accessible through said seat (13) and suited to automatically constrain said movable ring (12) of the safety belt, when said movable ring is correctly inserted into the containment body (11).

4. Emergency device (10) according to one of the preceding claims, **characterized in that** said drive cable (3) slides freely inside a sheath (32).

5. Emergency device (10) according to one of the preceding claims, **characterized in that** said button (21) of said safety button (2) slides with respect to a containment body (22) and is integrally fastened to a first rack gear (23) arranged parallel to the sliding direction (X) of said button (21), said first rack gear (23) being mechanically connected by means of a gear wheel (24) to a second movable rack gear (25), driven so that it translates in a parallel direction with respect to said first rack gear (23), and wherein the end (31) of each one of said one or more drive cables (3) is connected to said second rack gear (25), each of said one or more drive cables (3) being able to slide freely inside a sheath (32).

6. Emergency device (10) according to one of the preceding claims, **characterized in that** said button (21) of said safety button (2) comprises a return spring (26) acting coaxially with respect to said button (21) keeping said button (21) in the raised position which corresponds to the locked position of the safety belt when the movable ring is inserted in said locking assembly of said closing buckle (1).

7. Emergency device (10) according to one of the preceding claims, **characterized in that** said safety button (2) comprises fixing means suited to secure it permanently, such as screws or the like (27), or to secure it removably, such as clips or the like, to constrain said safety button (2) in any suitable position inside the vehicle, for example in a central area of the dashboard.

## Patentansprüche

1. Notfallvorrichtung (10) zur schnellen Lösung von Sicherheitsgurten für Fahrzeuge, **dadurch gekennzeichnet, dass** sie Folgendes umfasst:
- wenigstens eine Verschlussschnalle (1), dazu geeignet, zwischen einer Schnellkupplungs-/Auslösevorrichtung und dem beweglichen Ring eines Fahrzeug-Sicherheitsgurts befestigt zu werden, wobei die besagte wenigstens eine Verschlussschnalle (1) ihrerseits Folgendes umfasst: einen ersten Behälterkörper (11), einen Ring (12), der mit dem besagten, ersten Behälterkörper eine Einheit bildet und dazu konfiguriert ist, in eine vorhandene Schnellkupplungs-/Auslösevorrichtung für Sicherheitsgurte in einem Fahrzeug eingesteckt und an dieser befestigt zu werden, sowie eine Blockiereinheit, welche in dem besagten Behälterkörper (11) enthalten und dazu geeignet ist, den besagten beweglichen Ring des Fahrzeug-Sicherheitsgurts zu fixieren;
- wenigstens ein Antriebskabel (3), das mit einem seiner Enden (33) an der besagten Blockiereinheit der besagten Verschlussschnalle (1) und mit dem entgegengesetzten Ende (31) an wenigstens einer Sicherheitstaste (2) angeschlossen ist;
- wobei die besagte wenigstens eine Sicherheitstaste (2) ihrerseits einen zweiten Behälterkörper und eine Taste (21) umfasst, die mechanisch mit dem besagten Ende (31) des besagten, wenigstens einen Antriebskabels (3) verbunden ist,
und wobei die besagte Sicherheitstaste (2) so konfiguriert ist, dass sie auf Druck das besagte, auf die besagte Blockiereinheit der besagten Verschlussschnalle einwirkende Antriebskabel (3) zieht und damit den beweglichen Ring des daran befestigten Sicherheitsgurts freigibt und die Lösung des Sicherheitsgurts verursacht.

2. Notfallvorrichtung (10) nach Patentanspruch 1, **dadurch gekennzeichnet, dass** sie zwei oder mehr der besagten Verschlussschnallen (1) umfasst, von denen jede geeignet ist, in einer Schnellkupplungs-/Auslösevorrichtung eines in einem Fahrzeug installierten Sicherheitsgurts eingebaut zu werden, und wobei jede der besagten zwei oder mehr Verschlussschnallen (1) mittels eines der besagten Antriebskabel (3) mit einer einzelnen Sicherheitstaste (2) verbunden ist.

3. Notfallvorrichtung (10) nach Patentanspruch 1 oder 2, **dadurch gekennzeichnet, dass** die besagte Verschlussschnalle (1) den besagten, mit dem besagten ersten Behälterkörper (11) eine Einheit bildenden Ring (12) umfasst und wobei sich an der bezüglich des besagten Rings (12) entgegengesetzten Seite des besagten Behälterkörpers (11) eine Aufnahme (13) für die Einfügung eines beweglichen Rings eines Fahrzeug-Sicherheitsgurts befindet, und wobei innerhalb des besagten Behälterkörpers (11) die besagte Blockiereinheit montiert ist, welche durch die besagte Aufnahme (13) zugänglich und dazu geeignet ist, den besagten beweglichen Ring (12) des Sicherheitsgurts automatisch zu blockieren, wenn der besagte bewegliche Ring korrekt im Behälterkörper (11) eingesetzt ist.

4. Notfallvorrichtung (10) nach einem jeden der vorstehenden Patentansprüche, **dadurch gekennzeichnet, dass** das besagte Antriebskabel (3) frei in einer Ummantelung (32) gleitet.

5. Notfallvorrichtung (10) nach einem der vorstehenden Patentansprüche, **dadurch gekennzeichnet, dass** die besagte Taste (21) der besagten Sicherheitstaste (2) bezüglich eines Behälterkörpers (22) gleitet und vollständig an einer ersten Zahnstange (23) fixiert ist, welche parallel zur Gleitrichtung (X) der besagten Taste (21) angeordnet ist, wobei die besagte erste Zahnstange (23) mechanisch durch ein Zahnrad (24) mit einer zweiten, beweglichen Zahnstange (25) verbunden ist, welche angetrieben ist, so dass sie sich in einer bezüglich der besagten ersten Zahnstange (23) parallelen Richtung bewegt, und wobei das Ende (31) jedes des/der besagten einen/ mehreren Antriebskabels/Antriebskabel (3) mit der besagten zweiten Zahnstange (25) verbunden ist, wobei jedes des/der besagten einen/mehreren Antriebskabels/Antriebskabel (3) in der Lage ist, frei in einer Ummantelung (32) zu gleiten.

6. Notfallvorrichtung (10) nach einem der vorstehenden Patentansprüche, **dadurch gekennzeichnet, dass** die besagte Taste (21) der besagten Sicherheitstaste (2) eine Rückstellfeder (26) umfasst, die bezüglich der besagten Taste (21) koaxial agiert und die besagte Taste (21) in der erhobenen Position hält, welche der Blockierungsposition des Sicherheitsgurts entspricht, wenn der bewegliche Ring in der besagten Blockiereinheit der besagten Verschlussschnalle (1) eingesetzt ist.

7. Notfallvorrichtung (10) nach einem der vorstehenden Patentansprüche, **dadurch gekennzeichnet, dass** die besagte Sicherheitstaste (2) Befestigungsmittel umfasst, die dazu geeignet sind, sie dauerhaft zu befestigen, wie Schrauben oder ähnliches (27), oder sie abnehmbar zu befestigen, wie Klammern oder ähnliches, um die besagte Sicherheitstaste (2) in jeglicher geeigneten Position innerhalb des Fahrzeugs zu fixieren, beispielsweise in einem zentralen Bereich des Armaturenbretts.

## Revendications

1. Dispositif d'urgence (10) pour le décrochage rapide de ceintures de sécurité pour véhicules, **caractérisé en ce qu'**il comprend :
- au moins une boucle de fermeture (1) indiquée pour être reliée entre un dispositif d'accrochage/décrochage rapide et l'anneau mobile d'une ceinture de sécurité de véhicule, ladite au moins une boucle de fermeture (1) comprenant à son tour un premier corps de confinement (11), un anneau (12) solidaire dudit premier corps de confinement et configuré de manière à être inséré dans et fixé à un dispositif d'accrochage/décrochage rapide préexistant pour ceintures de sécurité dans un véhicule, et un groupe de blocage contenu dans ledit corps de confinement (11) et indiqué pour bloquer ledit anneau mobile de la ceinture de sécurité du véhicule ;
- au moins un câble d'actionnement (3) relié avec une de ses extrémités (33) audit groupe de blocage de ladite boucle de fermeture (1) et avec l'extrémité opposée (31) à au moins un bouton de sécurité (2) ;
- ledit au moins un bouton de sécurité (2), comprenant à son tour un deuxième corps de confinement et un bouton (21) relié mécaniquement à ladite extrémité (31) dudit au moins un câble d'actionnement (3),
et où ledit bouton de sécurité (2) est configuré de manière à ce que, quand il est appuyé, il tire ledit câble d'actionnement (3) qui agit sur ledit groupe de blocage de ladite boucle de fermeture (1), en relâchant l'anneau mobile de la ceinture de sécurité relié à celui-ci et en provoquant ainsi le décrochage de la ceinture de sécurité.

2. Dispositif d'urgence (10) selon la revendication 1, **caractérisé en ce qu'**il comprend deux ou plusieurs desdites boucles de fermeture (1), chacune étant indiquée pour être installée dans un dispositif d'accrochage/décrochage rapide d'une ceinture de sécurité dans un véhicule, et où lesdites deux ou plusieurs boucles de fermeture (1) sont reliées, chacune au moyen d'un desdits câbles d'actionnement (3), à un bouton de sécurité unique (2).

3. Dispositif d'urgence (10) selon la revendication 1 ou 2, **caractérisé en ce que** ladite boucle de fermeture (1) comprend ledit anneau (12) solidaire dudit premier corps de confinement (11) et où, sur le côté opposé dudit corps de confinement (11) par rapport audit anneau (12), un siège (13) est prévu pour l'introduction d'un anneau mobile d'une ceinture de sécurité de véhicule, et où, à l'intérieur dudit corps de confinement (11), est monté ledit groupe de blocage, qui est accessible à travers ledit siège (13) et indiqué pour bloquer automatiquement ledit anneau mobile (12) de la ceinture de sécurité, quand ledit anneau mobile est inséré correctement dans le corps de confinement (11).

4. Dispositif d'urgence (10) selon l'une des revendications précédentes, **caractérisé en ce que** ledit câble d'actionnement (3) coulisse librement à l'intérieur d'une gaine (32).

5. Dispositif d'urgence (10) selon l'une des revendications précédentes, **caractérisé en ce que** ledit bouton (21) dudit bouton de sécurité (2) coulisse par rapport à un corps de confinement (22) et est fixé de manière solidaire à une première crémaillère (23) disposée parallèlement par rapport à la direction de coulissement (X) dudit bouton (21), ladite première crémaillère (23) étant mécaniquement reliée au moyen d'une roue dentée (24) à une deuxième crémaillère mobile (25), commandée de manière à ce qu'elle se déplace par translation dans une direction parallèle par rapport à ladite première crémaillère (23), et où l'extrémité (31) de chacun desdits un ou plusieurs câbles d'actionnement (3) est relié à ladite deuxième crémaillère (25), chacun desdits un ou plusieurs câbles d'actionnement (3) étant en mesure de coulisser librement à l'intérieur d'une gaine (32).

6. Dispositif d'urgence (10) selon l'une des revendications précédentes, **caractérisé en ce que** ledit bouton (21) dudit bouton de sécurité (2) comprend un ressort de retour (26) agissant coaxialement par rapport audit bouton (21) en maintenant ledit bouton (21) dans la position soulevée qui correspond à la position de blocage de la ceinture de sécurité quand l'anneau mobile est inséré dans ledit groupe de blocage de ladite boucle de fermeture (1).

7. Dispositif d'urgence (10) selon l'une des revendications précédentes, **caractérisé en ce que** ledit bouton de sécurité (2) comprend des moyens de fixation indiqués pour le fixer de manière permanente, tels que vis ou similaires (27), ou pour le fixer de manière amovible, tels que agrafes ou similaires, pour bloquer ledit bouton de sécurité (2) dans une position adaptée quelconque à l'intérieur du véhicule, par exemple dans une zone centrale du tableau de bord.
